# EUROPÄISCHE PATENTANMELDUNG

(11) **EP 0 888 949 A1**
(43) Veröffentlichungstag der Anmeldung: **07.01.1999**
(21) Anmeldenummer: 98112092.6
(22) Anmeldetag: 01.07.1998
(51) Int. Cl.: B61K 9/12, G01D 5/241, G01B 7/28

(54) **Elektrischer Kondensator**

(30) Priorität: 03.07.1997 DE 19728507
(71) Anmelder: Schneider, Friedhelm Dr.-Ing., 41844 Wegberg (DE)
(72) Erfinder: Schneider, Friedhelm Dr.-Ing., 41844 Wegberg (DE)
(74) Vertreter: von Creytz, Dietrich, Dipl.-Phys.

(57) **Zusammenfassung**

Es wird ein elektrischer Kondensator zum Erfassen von Rundheitsabweichungen eines Eisenbahnrads beschrieben. Eine Kondensatorelektrode auf der Innenseite des Gleises wird neben der Schiene angeordnet. Um das Kondensatorsignal unabhängig von der Form und der seitlichen Lage des Radspurkranzes zu machen, wird die zweite Kondensatorelektrode als gesondertes Bauteil von unten elastisch gegen die Spurkranzkuppe des auszumessenden Rades gedrückt.

## Beschreibung

Die Erfindung betrifft einen elektrischen Kondensator zum Erfassen von Rundheitsabweichungen eines im eingebauten Zustand auf seinem Gleis rollenden Eisenbahnrades, wobei eine Kondensatorelektrode auf der Innenseite des Gleises neben der Schiene, auf der das Rad rollt, angeordnet ist.

Ein Gerät zum Erfassen der Rundheitsabweichungen von Eisenbahnrädern wird in DE 87 13 927 U1 beschrieben. Dort läuft das Rad auf einer Spezialschiene ab. Gegen die Spurkranzkuppel wird ein Meßbalken gedrückt; dessen Auslenkung mit Weggebern zu messen ist. Von dem Meßbalken werden zwei gegensätzliche Eigenschaften verlangt: Zum einen muß der Balken möglichst verwindungssteif sein, da er Meßgenauigkeiten von 0,1 mm ermöglichen soll. Zum anderen muß der Meßbalken möglichst masselos sein, da er hohen dynamischen Beanspruchungen ausgesetzt wird. Die größten dynamischen Belastungen entstehen zu dem Zeitpunkt, in welchem der Meßbalken den ersten Kontakt mit der rollenden Spurkranzkuppe (radialer Umfang des Radspurkranzes) erhält und von ihr heruntergedrückt wird. Aus diesem Grund sind mit dem bekannten Gerät Messungen nur bis zu Zuggeschwindigkeiten von maximal 8 bis 10 km/h möglich. Die meisten Schienenfahrzeuge sind aber nicht dafür ausgelegt, bei so geringen Geschwindigkeiten mit konstantem Tempo zu fahren; auch würde durch die Langsamfahrt der normale Betriebsablauf erheblich gestört. Schließlich verlangt die bekannte Meßmethode einen ungewöhnlich stabilen Unterbau der Schienen, da jede Durchbiegung der Schiene als Radfehler erscheinen würde.

In der DE-PS 11 94 892 wird ein Verfahren zum Ermitteln und Messen der Tiefe von Flachstellen an rollenden Eisenbahnrädern beschrieben, bei dem der Abstand zwischen Radspurkranz und einer an der Schiene angeordneten Bezugsfläche durch Messen der Kapazität überwacht wird. Hierzu wird auf der Innenseite des Gleises neben der Schiene eine gegen das Gleis isolierte Hilfsschiene derart angeordnet, daß der Spurkranz eines vorbeilaufenden Rades von der Hilfsschiene einen definierten lotrechten Abstand aufweist und die Hilfsschiene mit dem Spurkranz bzw. dessen Kuppe einen elektrischen Kondensator bilden. Die Kapazität dieses Kondensators stellte also ein Maß für den Abstand der Spurkranzkuppe und der als Gegenelektrode wirkenden Hilfsschiene dar. Es kann so auf die aktuelle Spurkranzhöhe geschlossen werden.

Die aus der vorgenannten DE-PS 11 94 892 bekannte Vorrichtung hat eine Reihe von Nachteilen: Zum ersten ist die zur Messung zur Verfügung stehende elektrische Kapazität wegen der Rundung der Spurkranzkuppe sehr klein. Zum zweiten hängt die Kapazität nicht nur von der Höhe, sondern auch von der Form des zu messenden Spurkranzes ab. Drittens ändert sich die Form durch den normalen Verschleiß im allgemeinen ungleichmäßig. Viertens wird die Kapazitat durch die seitliche Lage des Spurkranzes zur Schiene, die stark variieren kann, beeinflußt; aufgrund der zulässigen Toleranzen kann nämlich das Rad seitlich nicht exakt geführt werden.

Der Erfindung liegt die Aufgabe zugrunde, eine kapazitive Meßvorrichtung zum Erfassen von Rundheitsabweichungen eines Eisenbahnrads bzw. dessen Spurkranz zu schaffen, die es erlaubt, am rollenden Rad mit Geschwindigkeiten, die mit konstantem Tempo zu fahren sind, z.B. in der Größenordnung von 20 km/h und mehr, zu messen, ohne daß die in axialer Richtung des Rades gemessene Form oder Lagertoleranz des Spurkranzes in Bezug auf die Schiene einen störenden Einfluß ausüben könnten.

Die erfindungsgemäße Lösung besteht für den eingangs genannten elektrischen Kondensator zum Erfassen von Rundheitsabweichungen eines rollenden Eisenbahnrads, wobei eine Kondensatorelektrode auf der Innenseite des Gleises neben der Schiene angeordnet ist, darin, daß die zweite Kondensatorelektrode von unten elastisch gegen die Spurkranzkuppe des Eisenbahnrades gedrückt ist. Einige Verbesserungen und weitere Ausgestaltungen der Erfindung werden in den Unteransprüchen beschrieben.

Die mit der Form und Lage des Spurkranzes zusammenhängenden Nachteile des bekannten kapazitiven Meßgeräts werden erfindungsgemäß dadurch überwunden, daß der Spurkranz bzw. dessen Kuppe nicht unmittelbar eine Kondensatorelektrode bildet, sondern die Position einer zusätzlichen bzw. zweiten Kondensatorelektrode gegenüber der ersten Kondensatorelektrode bestimmt bzw. bei einer zu erfassenden Rundheitsabweichung ändert. Im bevorzugten Fall können die beiden Kondensatorelektroden die Platten eines Plattenkondensators darstellen. Gegebenenfalls wird die eine Elektrode mit der Schiene verbunden und die andere Elektrode wird elastisch gegen den Spurkranz gedrückt. Auf diese Weise kann die elektrisch wirksame Kondensatorfläche vielfach größer als die bei dem aus DE-PS 11 94 892 bekannten kapazitiven Meßverfahren als Kondensatorelektrode wirkende Spurkranzkuppe gemacht werden. Demgemäß werden die erfindungsgemäß zu erfassenden Kapazitäten bzw. deren Änderungen entsprechend groß und genau zu messen. Schließlich, da sich die Kondensatorelektroden nicht berühren und die bewegliche zweite Elektrode sehr leicht gemacht - mit sehr geringer träger Masse ausgestattet - werden kann, läßt sich die Messung mit Geschwindigkeiten in der Größenordnung von 20 bis 50 km/h und mehr ausführen.

Wenn ein Plattenkondensator vorliegt, können die beiden Kondensatorplatten entweder im Prinzip annähernd parallel zur durch die Rollflächen der Schienen des Gleises aufgespannten Schienenebene oder senkrecht zu dieser Ebene ausgerichtet werden. Im ersten Fall soll die zweite Kondensatorelektrode zwischen dem Radspurkranz und der ersten Elektrode angeordnet werden. Im anderen Fall (senkrecht zur Schienenebene stehende Kondensatorplattenebenen) wird die zweite Kondensatorelektrode vorzugsweise neben der ersten Elektrode auf der Innenseite des Gleises angeordnet. Während im ersten Fall der gegenseitige Abstand der beiden Platten durch den abrollenden Radspurkranz beeinflußt wird, verschiebt im anderen Fall der Radspurkranz (bei einer Unrundheit) die zweite Elektrode parallel zur Fläche der ersten Elektrode, so daß die für die kapazitiv wirksame Kondensatorfläche verändert wird. Im Rahmen der Erfindung sind auch Kombinationen der diskutierten Fälle denkbar, bei denen Abstand und Fläche zugleich beeinflußt werden. Es liegt auch im Rahmen der Erfindung, jede der Kondensatorelektroden aus zwei oder mehr zusammenwirkenden Einzelelektroden, z.B. aus zwei oder mehr auseinanderfingerten Platten, aufzubauen. In allen Fällen kann es günstig sein, wenn die zweite Elektrode so dünn bzw. in sich so elastisch, insbesondere als dünnes Blech, ausgebildet wird, daß sie sich gegebenenfalls auch der Krümmung des zu vermessenden Rades anpaßt.

Eine bevorzugte Lösung besteht darin, daß zwischen die beiden Kondensatorelektroden ein elastischer - die erforderliche Relativbewegung der Platten nicht behindernder - Körper eingefügt wird, so daß keine Fremdkörper, insbesondere kein als Abrieb von Rad und Schiene herrührender Eisenstaub oder von den Bremsklötzen oder Schienenbremsen herrührende Eisenteilchen zwischen die Platten gelangen, die das Dielektrikum beeinflussen und damit die Kapazität verändern bzw. das Meßsignal verfälschen können. Der elastische Körper zwischen den Platten kann zugleich die der zweiten Kondensatorelektrode zugeordnete Rückstellkraft zumindest zum Teil liefern. Er kann beispielsweise aus Schaumstoff bestehen oder als gasgefüllter Hohlraum mit elastischer Wandung, insbesondere als Faltenbalg, ausgebildet sein.

In einer weiteren Ausgestaltung der Erfindung wird die erste Kondensatorelektrode mit der Schiene formschlüssig verbunden. Diese Elektrode macht dann jede Durchbiegung der Schiene mit. Es ist nicht mehr erforderlich, die Schiene selbst innerhalb der Meßstrecke absolut unbeweglich zu verlegen. Daraus ergibt sich der bestechende Vorteil, daß auf ein gesondertes Fundament und damit auf einen erheblichen Aufwand im Meßbereich verzichtet werden kann.

In einer noch weiteren Ausgestaltung der Erfindung wird vorgeschlagen, eine der Elektroden in Schienenlängsrichtung in mindestens zwei Teile zu unterteilen, so daß in der Schienenlängsrichtung mindestens zwei Kondensatoren aufeinanderfolgen und so die Rundheitsabweichung des Rades an Teilbereichen des Radumfangs zu messen sind. Die Teilbereiche bzw. Teilkondensatoren sollen sich aber aneinander anschließen, so daß die gesamte Rundheitsabweichung am Umfang ermittelt werden kann. Dieses Verfahren hat den Vorteil, daß die Räder eines Drehgestells unabhängig voneinander vermessen werden können, auch wenn der Abstand der Räder kürzer als der Umfang des einzelnen Rades ist.

Anhand der schematischen Darstellung von Ausführungsbeispielen werden einige Einzelheiten der Erfindung erläutert. Es zeigen:
- **Fig. 1**: ein Ausführungsbeispiel eines erfindungsgemäßen Kondensators mit parallel zur Ebene der jeweiligen Schienen aufgespanntem Kondensatorspalt; und
- **Fig. 2**: ein Ausführungsbeispiel eines erfindungsgemäßen Kondensators mit senkrecht zu der Schienenebene aufgespanntem Kondensatorspalt.

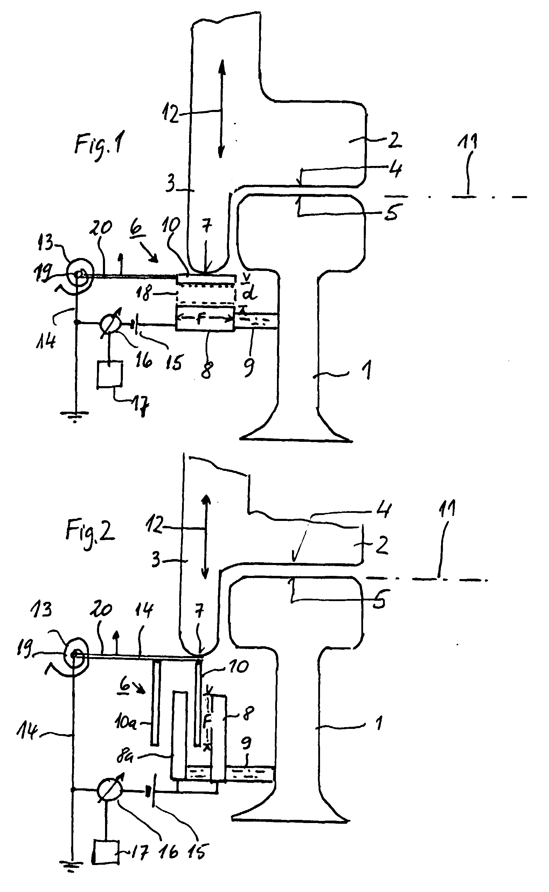

In Fig. 1 und 2 wird eine Eisenbahnschiene 1 im Querschnitt mit darauf rollendem Eisenbahnrad 2 (Ausschnitt) dargestellt. Das Rad 2 besitzt einen Spurkranz 3 und eine Lauffläche 4, die auf der Rollfläche 5 der Schiene 1 abrollt. Zum Erfassen von Fehlern der Radrundheit wird nach Fig. 1 ein insgesamt mit 6 bezeichneter Kondensator zwischen der Kuppe 7 des Spurkranzes 3 und der Schiene 1 vorgesehen, um Fehler bzw. Unrundheiten der Lauffläche 4 indirekt durch Abfühlen des Rundlaufs der Spurkranzkuppe 7 messen zu können.

Im Ausführungsbeispiel nach Fig. 1 wird als erfindungsgemäßes Meßgerät ein Plattenkondensator 6 vorgesehen, dessen erste (als Platte ausgebildete) Elektrode 8, vorzugsweise über einen Isolator 9, an der Schiene 1 im wesentlichen unbeweglich befestigt wird. Die zweite Elektrode 10 des Kondensators 6 wird so elastisch von unten gegen die Kuppe 7 des Spurkranzes 3 gedrückt, daß die beiden Elektroden 8 und 10 im wesentlichen parallel zueinander positioniert sind und (bei Betrieb) bleiben. Der gegenseitige Abstand d der beiden Elektroden 8 und 10 soll so groß sein, daß auch bei größten denkbaren Auslenkungen der Spurkranzkuppe 7 in Folge von Fehlern der Lauffläche 4 eine gegenseitige Berührung der Elektroden 8 und 10 gerade nicht zu befürchten ist. Andererseits sollen der Abstand der Elektroden möglichst klein und die gemeinsam kapazitiv wirksame Fläche F der beiden Elektroden möglichst groß sein, damit die Kapazität und im Ergebnis die Meßgenauigkeit des Kondensators 6 möglichst groß werden. In Fig. 1 soll der Abstand in der Größenordnung von annähernd 10 mm gewählt werden, damit Fehler und dergleichen ohne Zusammenschlagen der Elektroden 8, 10 zu messen sind. Zugleich soll die wirksame Fläche des Kondensators 6 so groß gewählt werden, daß Fehler in der Lauffläche 4 in der Größenordnung von 0,1 mm noch zu erfassen sind.

Im Ausführungsbeispiel nach Fig. 2 werden die beiden parallelen Platten 8 und 10 des Kondensators nicht parallel, sondern senkrecht zu der von den Schienen bzw. deren Rollflächen 5 aufgespannten Schienenebene 11 angeordnet. In diesem Fall wird, wie die Zeichnung zeigt, durch eine Bewegung der Spurkranzkuppe 7 in Richtung des Radradius 12 nicht der Abstand d, sondern die wirksame Fläche F des Kondensators 6 verändert, das heißt die Elektrode 10 wird gegen eine elastische Rückstellkraft 13 (in der Zeichnung symbolisiert durch eine Spiralfeder) parallel zu der an der Schiene 1 ortsfest positionierten ersten Elektrode 8 verschoben. Die gegenseitige Parallelverschiebung hat eine entsprechende Veränderung der kapazitiv wirksamen Fläche F zur Folge. Da die Kapazität C eines Kondensators proportional zum Quotienten F/D ist, gibt auch in diesem Fall die Änderung der Kapazität ein Maß für die Existenz bzw. Größe eines Fehlers der Lauffläche 4 an.

Zur Messung der Kapazität können zwischen die beiden Elektroden in einer eventuell geerdeten Leitung 14 eine Spannungsquelle 15 und ein Kapazitätsmeßgerät 16 vorgesehen werden. Letzteres kann - wie üblich - mit einem Rechner, Registriergerät 17 usw. verbunden werden.

Der Raum zwischen den beiden Elektroden 8 und 10 kann im Ausführungsbeispiel von Fig. 1 mit einem federnden Medium, z.B. mit einer Gummiblase 18, ausgefüllt werden. Dadurch werden unkontrollierte Änderungen des Dielektrikums ausgeschlossen, außerdem stellt die Gummiblase zugleich eine elastische Rückstellkraft dar. Letztere kann auch dadurch geliefert werden, daß die zweite Elektrode 10 über einen um eine Achse 19 schwenkbar gelagerten Hebel 20 infolge der elastischen Rückstellkraft 13 gegen die Kuppe 7 gedrückt wird. Im Prinzip ähnlich können Beschaltung, Dielektrikum und Lagerung der Kondensatorteile in Fig. 2 ausgebildet werden. Fig. 2 zeigt zusätzlich in gestrichelter Weise eine Alternative mit zwei Paaren von ineinandergefingerten ersten Elektroden 8 und 8a sowie zweiten Elektroden 10 und 10a. Es kommt also bei dem erfindungsgemäßen Kondensator (in Fig. 1 und 2) vor allem darauf an, daß die eine Kondensatorelektrode, wie immer sie ausgebildet ist, fest mit der Schiene verbunden wird und die andere Elektrode des Kondensators, die entsprechend der ersten Elektrode ausgebildet wird, relativ zu dieser durch radiale Auslenkungen der Kuppe 7 des Spurkranzes 3 bewegt wird.

### Bezugszeichenliste

- 1: = Schiene
- 2: = Rad
- 3: = Spurkranz
- 4: = Lauffläche (2)
- 5: = Rollfläche (1)
- 6: = Kondensator
- 7: = Spurkranzkuppe
- 8: = erste Elektrode
- 9: = Isolator
- 10: = zweite Elektrode
- 11: = Schienenebene
- 12: = Radradius
- 13: = elastische Rückstellkraft
- 14: = elektrische Leitung
- 15: = Spannungsquelle
- 16: = Kapazitätsmeßgerät
- 17: = Rechner
- 18: = Gummiblase
- 19: = Achse
- 20: = Hebel

## Patentansprüche

1. Elektrischer Kondensator zum Erfassen von Rundheitsabweichungen eines im eingebauten Zustand auf seinem Gleis rollenden Eisenbahnrads (2), wobei eine Kondensatorelektrode (8) auf der Innenseite des Gleises neben der Schiene (1), auf der das Rad (2) rollt, angeordnet ist,
**dadurch gekennzeichnet,**
daß die zweite Kondensatorelektrode (10) von unten elastisch gegen die Spurkranzkuppe (7) des Rads (2) gedrückt ist.

2. Kondensator nach Anspruch 1, bei dem die erste Kondensatorelektrode (8) als Kondensatorplatte ausgebildet ist,
**dadurch gekennzeichnet,**
daß die zweite Kondensatorelektrode (10) zur Vervollständigung eines Plattenkondensators (6) ebenfalls als Platte ausgebildet ist.

3. Kondensator nach Anspruch 2,
**dadurch gekennzeichnet,**
daß die beiden Platten (8, 10) des Kondensators (6) im Prinzip annähernd parallel zur durch die Schienen (1) des Gleises aufgespannten Ebene (11) ausgerichtet sind und daß die zweite Elektrode (10) zwischen Spurkranzkuppe (7) und erster Elektrode (8) angeordnet ist.

4. Kondensator nach Anspruch 2,
**dadurch gekennzeichnet,**
daß die beiden Elektroden (8, 10) des Kondensators (6) im Prinzip annähernd senkrecht zur durch die Rollflächen (5) der Schienen (1) des Gleises aufgespannten Schienenebene (11) ausgerichtet sind und daß die zweite Elektrode (10) neben der ersten Elektrode (8) auf der Innenseite des Gleises angeordnet ist.

5. Kondensator nach mindestens einem der Ansprüche 1 bis 4,
**dadurch gekennzeichnet,**
daß wenigstens eine der Kondensatorelektroden (8, 10) in Längsrichtung der Schiene (1) in elektrisch getrennt geschaltete Längenabschnitte bzw. Teilkondensatoren unterteilt ist.

6. Kondensator nach Anspruch 5,
**dadurch gekennzeichnet,**
daß die Längenabschnitte kürzer als der Umfang des Rades (1) sind.

7. Kondensator nach mindestens einem der Ansprüche 1 bis 6,
**dadurch gekennzeichnet,**
daß die zweite Elektrode (10) in sich so elastisch ist, daß sie sich der Krümmung des Rades (2) bzw. der Spurkranzkuppe (7) anpaßt.

8. Kondensator nach mindestens einem der Ansprüche 1 bis 7,
**dadurch gekennzeichnet,** daß sich zwischen den beiden Kondensatorelektroden (8, 10) ein Dielektrikum, insbesondere ein elastischer Körper (18), befindet, welches den Raum zwischen den Elektroden - bei Relativbeweglichkeit der zweiten (10) gegenüber der ersten Elektrode (8) - gegen ein Eindringen von Fremdteilen verschließt.

9. Kondensator nach mindestens einem der Ansprüche 1 bis 8,
**dadurch gekennzeichnet,**
daß die erste Elektrode (8) derart fest mit der Schiene verbunden ist, daß sie sich mit einer Durchbiegung der Schiene (1) mitbewegt.
